Europäisches Patentamt

European Patent Office

Office européen des brevets

(19)

(11) **EP 0 873 756 A2**

(12) **EUROPÄISCHE PATENTANMELDUNG**

(43) Veröffentlichungstag:
28.10.1998 Patentblatt 1998/44

(51) Int. Cl.⁶: **A61L 33/00**

(21) Anmeldenummer: 98104584.2

(22) Anmeldetag: 13.03.1998

(84) Benannte Vertragsstaaten:
**AT BE CH DE DK ES FI FR GB GR IE IT LI LU MC
NL PT SE**
Benannte Erstreckungsstaaten:
**AL LT LV MK RO SI**

(30) Priorität: 21.04.1997 DE 19716606

(71) Anmelder:
**HÜLS AKTIENGESELLSCHAFT
45764 Marl (DE)**

(72) Erfinder:
• **Anders, Christine, Dr.
45721 Haltern (DE)**
• **Lorenz, Günter, Dr.
52068 Aachen (DE)**
• **Höcker, Hartwig, Prof. Dr.
52076 Aachen (DE)**

(54) **Bakterienabweisend und blutverträglich modifizierte Oberflächen**

(57) Die Erfindung betrifft ein Verfahren zur bakterienabweisenden und blutverträglichen Modifizierung der Oberfläche von Substraten. Es ist dadurch gekennzeichnet, daß man auf hydrophile Oberflächen der Substrate ein $SO_2$-Plasma einwirken läßt. Das $SO_2$ kann durch Mikrowellenenergie zur Plasmabildung angeregt werden. Erzeugnisse mit bakterienabweisend und blutverträglich modifizierter Oberfläche können für hygienische, technische, nahrungsmittel- oder biotechnische sowie für medizinische Zwecke verwendet werden.

EP 0 873 756 A2

**Beschreibung**

Die Erfindung betrifft ein Verfahren zur bakterienabweisenden und zugleich blutverträglichen Modifizierung von Oberflächen, vorzugsweise von Kunststoffoberflächen, so daß die Adhäsion und die Vermehrung von Bakterien weitgehend verhindert werden und die Oberflächen zusätzlich blutverträglich sind. Die Erfindung betrifft weiterhin Erzeugnisse mit derart modifizierten Oberflächen sowie die Verwendung dieser Erzeugnisse für medizinische, hygienische, technische, lebensmittel- oder biotechnische Zwecke.

Die Ansiedelung und Vermehrung von Bakterien auf Oberflächen ist eine in der Regel unerwünschte Erscheinung, die häufig mit nachteiligen Folgen verbunden ist. So können in der Trinkwasser- und Getränketechnik Bakterienpopulationen zu einer gesundheitsgefährdenden Qualitätsminderung führen. Bakterien auf oder in Verpackungen bewirken häufig den Verderb von Lebensmitteln oder verursachen sogar Infektionen bei dem Verbraucher. In steril zu betreibenden biotechnischen Anlagen stellen systemfremde Bakterien ein erhebliches prozeßtechnisches Risiko dar. Solche Bakterien können mit Rohstoffen eingetragen werden oder bei mangelhafter Sterilisation in allen Anlageteilen zurückbleiben. Teile der Bakterienpopulation können sich durch Adhäsion dem normalen Flüssigkeitsaustausch beim Spülen und Reinigen entziehen und sich im System vermehren.

Weiterhin sind Bakterienansiedelungen in Wasseraufbereitungsanlagen (z.B. zur Entsalzung durch Membranen) oder auch in Behältern bekannt, die mit gelösten oder flüssigen unverdünnten organischen Substanzen gefüllt sind und für Bakterienpopulationen vorteilhafte Bedingungen aufweisen. Solche mikrobiellen Belegungen können in erheblichem Umfang zur Blockierung und/oder korrosiven Zerstörung der Anlage führen.

Besondere Bedeutung kommt dem Schutz vor Bakterienanhaftung und -ausbreitung in der Ernährung, der Pflege, hier insbesondere in der Altenpflege, und in der Medizin zu. Bei Massenbeköstigungen oder -ausschank existieren besonders dann erhebliche Risiken, wenn zur Vermeidung von Abfall von Einweggeschirr abgesehen wird und eine nur unzureichende Reinigung des Mehrweggeschirrs erfolgt. Die schädliche Ausbreitung von Bakterien in lebensmittelführenden Schläuchen und Rohren ist ebenso bekannt wie die Vermehrung in Lagerbehältern sowie in Textilien in feuchter und warmer Umgebung, z.B. in Bädern. Solche Einrichtungen sind bevorzugte Lebensräume für Bakterien, ebenso wie bestimmte Oberflächen in Bereichen mit hohem Publikumsverkehr, so z.B. in öffentlichen Verkehrsmitteln, Krankenhäusern, Telefonzellen, Schulen und insbesondere in öffentlichen Toiletten.

In der Alten- und Krankenpflege erfordern die häufig geminderten Abwehrkräfte der Betroffenen sorgfältige Maßnahmen gegen Infektionen, insbesondere auf Intensivstationen und in der häuslichen Pflege.

Besondere Sorgfalt bedarf die Verwendung medizinischer Gegenstände und Geräte bei medizinischen Untersuchungen, Behandlungen und Eingriffen, vor allem dann, wenn derartige Geräte oder Gegenstände mit lebendem Gewebe oder mit Körperflüssigkeiten in Kontakt kommen. Im Falle von Langzeit- oder Dauerkontakten, beispielsweise bei Implantaten, Kathetern, Stents, Herzklappen und Herzschrittmachern, können Bakterienkontaminationen zu einem lebensbedrohenden Risiko für den Patienten werden.

Es wurde bereits auf vielfältige Weise versucht, die Ansiedelung und Ausbreitung von Bakterien auf Oberflächen zu unterbinden. In J. Microbiol. Chemoth. 31 (1993), 261-271 beschreiben S.E.Tebbs und T.S.J.Elliott lackartige Beschichtungen mit quaternären Ammoniumsalzen als antimikrobiell wirkenden Komponenten. Es ist bekannt, daß diese Salze von Wasser, wäßrigen oder anderen polaren Medien sowie von Körperflüssigkeiten aus dem Beschichtungsmaterial herausgelöst werden und ihre Wirkung somit nur von kurzer Dauer ist. Dies gilt gleichermaßen für die Einarbeitung von Silbersalzen in Beschichtungen, so beschrieben in WO 92/18098.

T. Ouchi und Y. Ohya beschreiben in Progr.Polym.Sci. 20 (1995), 211 ff., die Immobilisierung von bakteriziden Wirkstoffen auf Polymeroberflächen durch kovalente Bindung oder ionische Wechselwirkungen. Häufig sind in solchen Fällen die keimtötenden Wirkungen gegenüber dem reinen Wirkstoff deutlich reduziert. Heteropolare Bindungen erweisen sich oft als nicht hinreichend stabil. Darüber hinaus führt die Keimabtötung in der Regel zu unerwünschten Ablagerungen auf den Oberflächen, die die weitere bakterizide Wirkung maskieren und die Grundlage für eine nachfolgende Bakterienbesiedelung bilden.

W. Kohnen et al. berichten in ZBl. Bakt. Suppl. 26, Gustav Fischer Verlag, Stuttgart-Jena-New York, 1994, Seiten 408 bis 410, daß die Adhäsion von Staphylococcus epidermidis auf einem Polyurethanfilm vermindert wird, wenn der Film durch eine Glimmentladung in Gegenwart von Sauerstoff vorbehandelt und dann mit Acrylsäure gepfropft wird.

Bei Gegenständen zur Verwendung für medizinische Zwecke, d.h. für Untersuchungen, Behandlungen und Eingriffe, wie zuvor beschrieben, spielen nicht nur die bakterienabweisenden Eigenschaften eine Rolle, vielmehr kommt es auch auf Blutverträglichkeit, d.h. auf möglichst ausgeprägte antithrombogene Eigenschaften an. Nach der internationalen Patentanmeldung WO 94/17904 lassen sich Membranen für medizinische Zwecke durch Behandlung mit einem Niederdruckplasma so modifizieren, daß u.a. ihre thrombogenen Eigenschaften gegenüber unbehandelten Membranen herabgesetzt sind. Unter den geeigneten Plasma-bildenden Gasen wird auch Schwefeldioxid aufgeführt. J.-C. Lin et al. beschreiben in Biomaterials 16 (1995), 1017-1023, die Plasma-Behandlung der inneren Oberfläche von LDPE-Rohren, wobei wiederum Schwefeldioxid Plasma-bildendes Gas eingesetzt werden kann. Die Autoren berichten, daß die durch $SO_2$-Plasma modifizierten Oberflächen Sulfonatgruppen enthielten und stark hydrophil, aber in höherem

2

EP 0 873 756 A2

Maße thrombogen waren als die unbehandelten Oberflächen. Die Autoren vermuten, daß dies auf die kombinierte Wirkung von Oberflächenchemie, also der Sulfonierung, und der Hydrophilie der Oberflächen zurückgeht.

Der vorliegenden Erfindung lag die Aufgabe zugrunde, ein Verfahren zur Behandlung der Oberflächen von Substraten zu entwickeln, durch das die Oberflächen gleichzeitig bakterienabweisend und, worauf es besonders bei medizinischen Verwendungen ankommt, blutverträglich modifiziert werden, ohne daß die mechanischen Eigenschaften der behandelten Materialien dadurch verändert werden oder sonstige nennenswerte Nachteile eintreten.

Es wurde überraschenderweise gefunden, daß sich die Oberflächen von Substraten, insbesondere von polymeren Kunststoffsubstraten, vorteilhaft bakterienabweisend und zugleich blutverträglich modifizieren lassen, wenn man auf hydrophile Oberflächen dieser Substrate ein $SO_2$-Plasma einwirken läßt.

Die erfindungsgemäß modifizierten Oberflächen vermindern die Adhäsion und Vermehrung von Bakterien in einem hohen Maße auch über längere Zeit. Von dieser Wirkung betroffene Bakterien sind u.a. Staphylococcus aureus, Staphylococcus epidermidis, Streptococcus pyogenes, Klebsiella pneumoniae, Pseudomonas aeroginosa und Escherichia coli. Die Oberflächen der erfindungsgemäß modifizierten Substrate sind frei von migrationsfähigen und/oder extrahierbaren Monomer- und Oligomeranteilen. Unerwünschte Nebenwirkungen durch frei gesetzte körperfremde Stoffe oder durch abgetötete Bakterien treten nicht ein.

Insbesondere die guten blutverträglichen Eigenschaften der erfindungsgemäß modifizierten hydrophilen Oberflächen sind unerwartet. Nachdem J.-C. Lin et al., loc, cit., die erhöhte Thrombogenität der von ihnen mit $SO_2$-Plasma behandelten Polymeroberflächen mit deren Hydrophilie in Zusammenhang gebracht haben, hätte man Polymere mit hydrophiler Oberfläche vermeiden sollen, wenn man eine verbesserte Blutverträglichkeit anstrebt.

Zu den für das erfindungsgemäße Verfahren geeigneten polymeren Kunststoffsubstraten zählen hydrophile Homo- und Copolymere, beispielsweise Polyolefine, wie Polyethylen, Polypropylen, Polyisobutylen, Polybutadien, Polyisopren, natürliche Kautschuke und Polyethylen-co-propylen; halogenhaltige Polymere, wie Polyvinylchlorid, Polyvinylidenchlorid, Polychloropren, Polytetrafluorethylen und Polyvinylidenfluorid; Polymere und Copolymere aus vinylaromatischen Monomeren, wie Polystyrol, Polyvinyltoluol, Polystyrol-co-vinyltoluol, Polystyrol-co-acrylnitril, Polystyrol-co-butadien-co-acrylnitril; Polykondensate, beispielsweise Polyester, wie Polyethylenterephthalat und Polybutylenterephthalat; Polyamide, wie Polycaprolactam, Polylaurinlactam und das Polykondensat aus Adipinsäure und Hexamethylendiamin; Polyetherblockamide, z.B. aus Laurinlactam oder Caprolactam und Polyethylenglokol mit durchschnittlich 8, 12 oder 16 Ethoxygruppen; weiterhin Polyurthane, Polyether, Polycarbonate, Polysulfone, Polyetherketone, Polyesteramide und -imide, Polyacrylnitril, Polyacrylate und -methacrylate.

Soweit die Polymeren oder Copolymeren nicht hinreichend hydrophil sind, müssen sie hydrophiliert werden. Das ist dann der Fall wenn der Kontaktwinkel von Wasser bei 25°C, gemessen nach dem Verfahren von R.J.Good et al., Techniques of Measuring Contact Angles in Surface and Colloid Sciences, Vol. 11, Plenum Press New York, N.Y., 1979, <30° beträgt. Für die Hydrophilierung steht eine ganze Reihe von Methoden zur Verfügung. So kann man hydroxylgruppenhaltige Monomere, wie Hydroxyethyl(meth)acrylat oder Hydroxybutylacrylat, strahleninduziert auf eine polymere Substratoberfläche aufpfropfen (siehe deutsche Patentanmeldung 197 000 79.7). Statt Monomere zu verwenden, kann man auch ein hydroxylgruppenhaltiges Copolymer auf die Substratoberfläche pfropfen (siehe deutsche Patentanmeldung 197 000 81.9). Man kann auch derartige Copolymere in üblicher Weise auf die Substratoberfläche aufbringen, z.B. durch Spritzen. Tauchen oder Spin-Coating mit Lösungen der Copolymeren. Weiterhin lassen sich nicht hinreichend hydrophile Polymere oder Copolymere durch Behandlung mit Argon-Plasma oder Bestrahlung mit UV-Strahlen von 150 bis 320 nm hydrophilieren. Durch Behandlung mit Ammoniak-Plasma erreicht man nicht nur eine Hydrophilierung, sondern durch Einführung von Aminogruppen zusätzliche physiologische Effekte. Schließlich führt auch eine Ätzung mit starken Säuren, wie Schwefelsäure, Salzsäure und Salpetersäure, oder Basen, wie Alkalimetallhydroxiden, zu einer hinreichenden Hydrophilierung von hydrophoben Polymeren oder Copolymeren.

Auf die hydrophilen bzw. hydrophilierten Substratoberflächen läßt man erfindungsgemäß ein $SO_2$-Plasma einwirken. Dadurch werden auf der Oberfläche Sulfonat- und Sulfatgruppen sowie, möglicherweise sekundär aus Radikalen bei Luftzutritt nach Ende der Plasmabehandlung, Hydroxyl- und Carboxylgruppen erzeugt. Diese Gruppen oder ein Teil davon bringen zusammenwirkend die erwähnten erwünschten Eigenschaften der modifizierten Oberflächen hervor.

Neben Schwefeldioxid können auch andere, in bezug auf die erwünschten Wirkungen sowie auf unerwünschte Eigenschafen der behandelten Oberflächen inerte Gase vorhanden sein, wie Argon und Stickstoff. Das Schwefeldioxid liegt zu Beginn der Plasmabehandlung vorteilhaft unter einem (Partial)druck von 10 bis 100 Pa, insbesondere von 10 bis 40 Pa vor. Vorteilhaft arbeitet man nur mit $SO_2$ unter einem entsprechenden Vakuum. Das $SO_2$ kann z.B. durch Mikrowellenenergie zur Plasmabildung angeregt werden. Die Leistung eines geeigneten Mikrowellengenerators kann variabel sein und z.B. zwischen 100 und 4000 Watt, insbesondere zwischen 400 und 2000 Watt betragen. Die Temperatur stellt sich dann im allgemeinen auf 50 bis 100°C, insbesondere auf 50 bis 70°C ein. Die Behandlungsdauer liegt im allgemeinen zwischen 1 Sekunde und 10 Minuten, insbesondere zwischen 10 Sekunden und 4 Minuten. Durch zweckentsprechende Wahl der Parameter Leistung und Behandlungsdauer läßt sich der Schwefeleintrag gut und reproduzierbar regeln. Durch orientierende Versuche lassen sich die optimalen Bedingungen für eine gewünschtes Maß an Schwefeleintrag und die Erzeugung der genannten sauerstoffhaltigen Gruppen unschwer ermitteln. Auf diese Weise läßt sich eine etwaige Ablationswirkung infolge zu hoher Mikrowellenleistung und/oder zu langer Behandlungsdauer zuverlässig vermeiden.

Der Schwefeleintrag kann durch ESCA (Electron Spectroscopy for Chemical Application) als Gesamtschwefel hinreichend genau bestimmt werden. Mittels SIMS (Sekundärionen-Massenspektrometrie) kann man zwischen Sulfonat- und Sulfatgruppen unterscheiden. Carboxylgruppen lassen sich relativ genau und Hydroxylgruppen weniger sicher ebenfalls durch ESCA bestimmen. Genauere Werte erhält man für Carboxylgruppen durch Umsetzung mit Trifluorethanol oder Trifluorethylamin und Bestimmung der eingeführten Trifluormethylgruppen durch ESCA. Der Gehalt an Hydroxylgruppen läßt sich durch Umsetzung mit Trifluoressigsäureanhydrid und wiederum Bestimmung der Trifluormethylgruppen durch ESCA ermitteln.

Erzeugnisse mit erfindungsgemäß modifizierten Oberflächen eignen sich für viele Verwendungen, bei denen es darauf ankommt, Bakterienadhäsion und -wachstum zu vermeiden oder zurückzudrängen. Sie sind also u.a. für hygienische, technische, nahrungsmittel- und und biotechnische Zwecke geeignet, wie sie beispielhaft zuvor beschrieben wurden. Die Erzeugnisse eignen sich vorzugsweise für medizinische Verwendungen, besonders dann wenn es gleichzeitig auf bakterienabweisende Eigenschaften und Blutverträglichkeit ankommt. Aber auch bei Kontakten mit anderen Körperflüssigkeiten als Blut, wie Lymphe, oder mit Gewebe kommen die vorteilhaften Eigenschaften der erfindungsgemäßen Gegenstände zur Geltung. Medizinische Verwendungen sind z.B. solche als Katheter, Arterienprothesen, Oxygenatoren, Lymphdrainagen, Wundverbände, Tubusse, Stents, Herzklappen oder als Katheter bei der Peritonaldialyse.

Die folgenden Beispiele sollen die Erfindung weiter erläutern, nicht aber ihren Umfang begrenzen, wie er in den Patentansprüchen dargelegt ist.

Beispiele

Die verwendeten Monomere zur Hydrophilierung

Von den in der Tabelle 1 aufgeführten Monomeren wurden jeweils 5 Massen-% wäßrige Lösungen hergestellt.

Tab. 1

| Eingesetzte Monomere; 5 Massen-% Lösung | |
|---|---|
| Monomer | Kurzzeichen |
| Acrylsäure | AAc |
| Methacrylsäure | MAAc |
| Diethylenglykolmethacrylat | DEGMA |
| Polyethylenglykolmethacrylat | PEGMA |
| 2-Hydroxyethylmethacrylat | HEMA |
| 2-Hydroxyethylacrylat | HEA |
| 4-Hydroxybutylacrylat | HBA |

Die zu beschichtenden Substrate

Die Untersuchungen zu den Auswirkungen der erfindungsgemäßen Beschichtungen auf bakterienabweisendes Verhalten wurden an folgenden Folien (Tab. 2) durchgeführt, die jeweils Stärken von 0,1 bis 0,5 mm und eine für die Bestimmung relevante Oberfläche von 4 cm$^2$ besaßen. Die Herstellung erfolgte sowohl durch Lösungen von Pulvern in Lösemitteln, anschließendes Gießen in Petrischalen und Trocknen sowie durch Kalandrieren oder Extrusion. In einigen Fällen standen Folien vom Hersteller zur Verfügung.

Tab. 2

| Eingesetzte Folien | | | |
|---|---|---|---|
| Folien-Nr. | Kunststoff | Name, Quelle | Herstellung |
| F 1 | Polyamid 12 | VESTAMID, HüLS AG | Extrudieren |
| F 2 | Polystyrol | VESTYRON, HüLS AG | Pressen |
| F 3 | Polyurethan | Pellethane 2363-A, DOW CHEMICAL COMPANY | Extrudieren |
| F 4 | Polyetherblockamid | VESTAMID, HüLS AG | Extrudieren |
| F 5 | Polyethylen | VESTOLEN A, VESTOLEN GmbH | Extrudieren |
| F 6 | Polypropylen | VESTOLEN P, VESTOLEN GmbH | Extrudieren |
| F 7 | Polyorganosiloxan | NG 37-52, Silicon GmbH, Nünchritz | Rakeln |
| F 8 | Polyvinylchlorid | VESTOLIT P + DEHP, VESTOLIT GmbH | Brabandern |
| F 9 | Polytetrafluorethylen | HOSTAFLON, HOECHST AG | Extrudieren |

Die Aktivierung der Substratoberflächen

Die Folien werden zunächst aktiviert, wahlweise nach den in Tabelle 3 angegebenen Verfahren und Bedingungen.

Tab. 3

| Aktivierungsbedingungen | | |
|---|---|---|
| Aktivierungs kennzeichen | Aktivierungsverfahren | Bedingungen |
| A 1 | UV-Excimer-Strahlen (=172 nm) | 1 s - 20 min, 1 mbar, 4 cm Abstand |
| A 2 | Mikrowellenplasma (Argon) | 1 s - 30 min, 1 mbar |
| A 3 | Hochfrequenzplasma (Argon) | 1 s - 30 min, 6 mbar |
| A 4 | Corona | 0,1 s - 60 s, 2 mm Abstand |
| A 5 | Beflammen | $CH_4$:Luft = 1:10,4 cm Abstand |
| A 6 | Gamma-Bestrahlung | 1 MRad |
| A 7 | Elektronenstrahlen | 1 min |
| A 8 | NaOH-Lösung | 1 %, 5 min, 60°C |
| A 9 | UV-Excimer-Strahlen (=308 nm) | 10 s - 20 min |

Beschichtung der Substratoberflächen durch Pfropfcopolymerisation

Nach der Aktivierung werden die Folien, Gießkörper oder anderen Substratkörper sowie im Falle technischer Fertigung die Extrudate oder Spritzguß-Körper mit den in Tabelle 1 angegebenen Lösungen beschichtet, und zwar nach den in Tabelle 4 angegebenen Verfahren.

Tab. 4

| Beschichtungsverfahren | |
|---|---|
| Beschichtungskennzeichen | Beschichtungsverfahren |
| T 1 | Tauchen |

Tab. 4 (fortgesetzt)

| Beschichtungsverfahren | |
| --- | --- |
| Beschichtungskennzei-chen | Beschichtungsverfahren |
| T 2 | Sprühen |
| T 3 | Streichen |

Während des Tauchens und nach Besprühen oder Bestreichen wird mit UV-Licht im Bereich von 250 - 500 nm, vorzugsweise 290 - 320 nm, bestrahlt.

$SO_2$-Plasmabehandlung hydrophilierter Polymeroberflächen

Die hydrophilierten Polymeroberflächen werden nun durch eine $SO_2$-Plasmabehandlung mit $SO_x$-Gruppen ausgerüstet. Hierzu werden die Proben in einer Mikrowellenplasmaanlage bei einem Druck von 10 bis 40 Pa bei einer Leistung des Mikrowellengenerators von 100 bis 4000 Watt, insbesondere zwischen 300 und 2000 Watt, 10 Sekunden bis 4 Minuten einer $SO_2$-Plasmabehandlung unterworfen. Der eingetragene Schwefelgehalt wird mit ESCA ermittelt. Die Ergebnisse dieser Versuche sind exemplarisch an Polyamid 12 (F1), Polyurethan (F2) und Polyetherblockamid (F4) in Tabelle 5 dargestellt.

Tab. 5

| ESCA-Schwefelgehalt in Atom-% hydrophilierter Polymeroberflächen nach $SO_2$-Plasmabehandlung unterschiedlicher Zeitdauer | | | | | | | |
| --- | --- | --- | --- | --- | --- | --- | --- |
| Behandl. zeit/Probe | F1/AAc | F1/MAAc | F1/DEGMA | F1/PEGMA | F1/HEMA | F1/HEA | F1/HBA |
| 10s | 0,6 | 0,9 | 0,9 | 1,3 | 1,2 | 1,3 | 1,0 |
| 60s | 2,2 | 3,0 | 3,8 | 3,9 | 3,6 | 1,9 | 1,2 |
| 240s | 4,2 | 4,0 | 5,0 | 5,2 | 5,0 | 3,7 | 2,2 |
| | F3/AAc | F3/MAAc | F3/DEGMA | F3/PEGMA | F3/HEMA | F3/HEA | F3/HBA |
| 10s | 1,0 | 1,1 | 1,1 | 1,5 | 1,4 | 0,6 | 1,1 |
| 60s | 2,5 | 3,1 | 3,8 | 3,5 | 3,4 | 2,1 | 1,9 |
| 240s | 4,0 | 4,2 | 5,1 | 4,9 | 5,2 | 4,5 | 2,5 |
| | F4/AAc | F4/MAAc | F4/DEGMA | F4/PEGMA | F4/HEMA | F4/HEA | F4/HBA |
| 10s | 1,3 | 0,6 | 1,1 | 1,0 | 1,4 | 1,1 | 0,9 |
| 60s | 2,9 | 3,0 | 4,0 | 3,1 | 3,0 | 2,7 | 2,2 |
| 240s | 4,5 | 3,9 | 5,1 | 4,5 | 4,7 | 4,9 | 3,1 |

Bestimmung der bakterienabweisenden Eigenschaften

Die Prüfung auf die Adhäsion von Bakterien kann mit verschiedenen Stämmen vorgenommen werden. Hierzu eignen sich die in der Tabelle 6 aufgeführten Mikroorganismen, da sie in klinischen Isolaten von infizierten Kathetern häufig vorkommen.

Tab. 6

| Bakterienstämme zur Messung der primären Adhäsion | |
| --- | --- |
| | Stamm |
| B 1 | Staphylococcus aureus |

Tab. 6 (fortgesetzt)

| Bakterienstämme zur Messung der primären Adhäsion | |
| --- | --- |
| | Stamm |
| B 2 | Staphylococcus epidermidis |
| B 3 | Escherichia coli |
| B 4 | Klebsiella pneumoniae |

Das Verfahren zur Bestimmung der primären Adhäsion (also unabhängig von späterer Vermehrung) dieser Bakterienstämme wird beispielhaft für Klebsiella pneumoniae in der Folge beschrieben. Die primäre Adhäsion der anderen Stämme (B1 bis B3) wurde analog bestimmt.

Bestimmung der primären Bakterienadhäsion unter statischen Bedingungen

Eine Über-Nacht-Kultur des Bakterienstammes Klebsiella pneumoniae in Hefeextrakt-Pepton-Glukose-Nährmedium (1 % + 1 % 1 %) wird abzentrifugiert und in Phosphat-gepufferter Saline (= PBS; 0.05M $KH_2PO_4$ (?), pH 7,2 + 0,9 % NaCl) wieder aufgenommen. Es wird auf eine Zellkonzentration von 108 Zellen/ml in PBS-Puffer verdünnt. Die suspendierten Bakterien werden mit dem zu untersuchenden Folienstück für 3 h in Berührung gebracht. Dazu werden doppelseitig beschichtete kreisförmige Folienstücke mit einem Durchmesser von 1,6 cm ( = 4,02 cm2) auf eine Präpariernadel-gesteckt und mit der Zellsuspension geschüttelt. Einseitig beschichtete Folien werden in Form einer runden ebenen Scheibe von 4,5 cm Durchmesser und mit einer Stützmembran aus 2 - 3 mm dickem Weich-PVC in eine Membranfilterapparatur eingespannt. Auf die nach oben zeigende Seite mit der zu prüfenden Beschichtung wird die Zellsuspension aufgegeben und 3 h geschüttelt. Die Membranfilterapparatur muß dicht sein, d.h. es darf keine Zellsuspension durch undichte Stellen ausfließen.

Nach Ablauf der Kontaktzeit wird die Bakteriensuspension mit einer Wasserstrahlpumpe abgesaugt, und die Folienstücke werden zum Waschen mit 20 ml steriler PBS-Lösung in einem 100 ml-Becherglas für 2 min. geschüttelt. Das Folienstück wird nochmals in sterile PBS-Lösung eingetaucht und dann in 10 ml erhitztem TRIS/EDTA (0,1 M Trishydroxyethylaminomethan, 4 mM Ethylendiamintetraessigsäure, mit HCl auf pH 7,8 eingestellt) für 2 min. im siedenden Wasserbad extrahiert.

Mit der Extraktionslösung werden kleine Eppendorf-Cups befüllt und sofort bis zu Biolumineszenz-Bestimmung des extrahierten Adenosintriphosphats (ATP) bei - 20 °C eingefroren. Die Bestimmung wird wie folgt ausgeführt: In ein transparentes Röhrchen aus Polycarbonat wird 100 ml Reagenzienmix (Biolumineszenz-Test CLS II, Fa. BOEHRINGER MANNHEIM GmbH) gegeben und über einen Zeitraum von 10 sec. werden in dem Lichtimpuls-Meßgerät LUMAT LB 9501 (Laboratorien Prof. Berthold GmbH, Wildbad) die Lichtimpulse integriert. Dann wird eine 100 $\mu$l-Probe zugegeben und erneut gemessen. Die relativen Lichteinheiten (RLU) werden durch Subtraktion der Lichtimpulse im Reagenzienmix von der Anzahl der gemessenen Lichtimpulse im kompletten Ansatz erhalten. Dieser Wert steht in Relation zu der Anzahl der an der Folie adhärierten Bakterien. Der Umrechnungsfaktor zwischen dem RLU-Wert und Bakterienanzahl wird bestimmt, indem ein Aliquot von 0,1 ml der Bakteriensuspension mit 108 Zellen pro ml in 10 ml heißem TRIS/EDTA extrahiert werden und dann der ATP-Gehalt bestimmt wird.

Für Klebsiella pneumoniae ergibt sich ein Wert von 1,74 x 104 RLU = 1 x 107 Zellen im ATP-Extraktionsansatz. Bei diesem Meßwert von 4,7 x 104 RLU von 4 cm$^2$ Folie waren pro cm$^2$ Folienoberfläche

$$\frac{4.7 \cdot 10^4}{4} = 1,175 \cdot 10^4 \text{ RLU/cm}^2 = 6,8 \times 10^6 \text{ Zellen pro cm2}$$

primär adhäriert.

Die Reduktion der Bakterienadhäsion an $SO_2$-plasmabehandelten, hydrophilierten Polymeroberflächen ist am Polyamid 12 (F1) in Tabelle 7 exemplarisch dargestellt.

Tab. 7

| Bakterienadhäsion an hydrophiliertem und $SO_2$-plasmabehandel-Polyamid 12 (F1) | | | | | | | | |
|---|---|---|---|---|---|---|---|---|
| Probe | SO2-Plasmabehandlung | Bakterienadhäsion [10.000 Zellen/cm$^2$] | | | | | | |
| | | B 1 | | B 2 | | B 3 | | B 4 | |
| | | Wert | D [%] | Wert | D [%] | Wert | D [%] | Wert | D [%] |
| F1 | unbehand. | 380 | - | 450 | - | 680 | - | 770 | - |
| F1/AAc | 10s | 41 | 89 | 51 | 89 | 20 | 97 | 50 | 94 |
| F1/AAc | 60s | 40 | 89 | 45 | 90 | 10 | 99 | 61 | 92 |
| F1/AAc | 240s | 28 | 93 | 32 | 93 | 15 | 98 | 49 | 94 |
| F1/HEMA | 10s | 51 | 87 | 71 | 84 | 31 | 95 | 75 | 90 |
| F1/HEMA | 60s | 48 | 87 | 60 | 87 | 39 | 94 | 30 | 96 |
| F1/HEMA | 240s | 45 | 88 | 65 | 86 | 43 | 94 | 105 | 86 |
| F1/PEGMA | 10s | 30 | 92 | 33 | 93 | 41 | 94 | 150 | 81 |
| F1/PEGMA | 60s | 41 | 89 | 25 | 94 | 38 | 94 | 90 | 88 |
| F1/PEGMA | 240s | 25 | 93 | 28 | 94 | 35 | 95 | 39 | 95 |
| D [%] = Differenz zum unbehandelten Polyamid 12 (1 F) in % = Reduzierung der Bakterienadhäsion in % | | | | | | | | |

Die Tabelle 7 verdeutlicht, daß nach dem erfindungsgemäßen Verfahren polymere $SO_x$-enthaltende Beschichtungen erhalten werden, die zur erheblichen Reduzierung der Bakterienadhäsionen führen. Die Minderungen liegen deutlich über 50 % im Vergleich zum unbehandelten Substrat.

Bestimmung der Blutverträglichkeit

Zur Beurteilung der Blutverträglichkeit wurden verschiedene Parameter untersucht. Die Untersuchungen wurden von einem akkreditierten Prüflabor nach DIN EN 30993 durchgeführt.

C5a-Generation (Komplementaktivierung)

Das Komplementsystem setzt sich aus mehr als 20 Proteinen zusammen, welche als Abwehrsystem gegen eingewanderte Mikroorganismen wirken. Bei Aktivierung des Komplementsystems im Zusammenhang mit Erkrankungen oder durch Kontakt mit künstlichen Oberflächen setzt eine Kaskade von proteolytischen Enzymen die Anaphylatoxine C3a, C4a und C5a frei. Die erhöhte Konzentration einer Komplementkomponente zeigt die Aktivierung des Komplementsystems an. Als Folgeprozesse können Aktivierung der Leukozyten und deren Aggregation ausgelöst werden. Tabelle 8 zeigt die Ergebnisse der Prüfung der Komplementaktivierung am Beispiel von PA 12 (F1), F1/HEMA und F1/HBA. F1/HEMA und F1/HBA wurden 240 s mit einem $SO_2$-Plasma behandelt.

Bestimmung adhärenter und aktivierter Thrombozyten

Thrombozytenadhäsion und darauffolgende Aktivierung von Thrombozyten auf Fremdkörper- und Gefäßoberflächen sind entscheidence Vorgänge während der Thrombusbildung und Ursache einer möglichen Embolie. Daher wird die Adhäsion und die Aktivierung von Thrombozyten auf künstlichen Oberflächen in Blutkontakt als wesentliche Limitierung für die Anwendung von Kunststoffen im medizinischen Bereich angesehen. In Tabelle 8 sind die Ergebnisse der Bestimmung adhärenter und aktivierter Thrombozyten am Beispiel von PA 12 (F1). F1/HEMA und F1/HBA angegeben.

Partielle Thromboplastinzeit (PTT)

Die partielle Thromboplastinzeit ist die Gerinnungszeit des rekalzifizierten Citratplasmas nach der Zugabe von partiellem Thromboplastin. Eine Verkürzung der PTT deutet auf eine Aktivierung des Gerinnungssystems hin, was zu einer Thrombusbildung führt. Blutverträgliche Materialien zeigen keine Aktivierung des Gerinnungssystems und damit auch keine Verkürzung der PTT.

Tabelle 8

| Komplementaktivierung, adhärente Thrombozyten, aktivierte, adhärente Thrombozyten und partielle Thromboplastinzeit von PA 12 (F1), F1/HEMA und F1/HBA nach Blutkontakt; F1/HEMA und F1/HBA wurden 240 s mit einem $SO_2$-Plasma behandelt | | | | |
|---|---|---|---|---|
| Probe | C5a-Generation in % relativ zur Kontrolle | adhärente Thrombozyten in % relativ zur Kontrolle | aktivierte adhärente Thrombozyten in % relativ zur Kontrolle | partielle Thromboplastin zeit in % relativ zur Kontrolle |
| Plasma | - | - | - | 100 |
| Kontrolle | 100* | 100[§] | 100[#] | 30[#] |
| F1 | 24 | 80 | 100 | 107 |
| F1/HEMA/$SO_2$ | 20 | 56 | 31 | 103 |
| F1/HBA/$SO_2$ | 22 | 63 | 40 | 115 |

\* : Cellulosemembran;  
[§] : Polypropylenfolie;  
[#] : mit Kaolin versetztes Cephalin

Die Tabelle 8 verdeutlicht, daß nach dem erfindungsgemäßen Verfahren polymere $SO_x$ -enthaltende Beschichtungen erhalten werden, die zu einer erheblichen Verbesserung der Blutverträglichkeit führen. Dies ist besonders deutlich an der Thrombozytenadhäsion sowie an der Aktivierung adhärenter Thrombozyten zu erkennen.

**Patentansprüche**

1. Verfahren zur bakterienabweisenden und blutverträglichen Modifizierung der Oberfläche von Substraten, dadurch gekennzeichnet, daß man auf hydrophile Oberflächen der Substrate ein $SO_2$-Plasma einwirken läßt.

2. Verfahren nach Anspruch 1, dadurch gekennzeichnet, daß der $SO_2$-(Partial)druck zu Beginn der Plasmabehandlung 10 bis 100 Pa beträgt.

3. Verfahren nach Anspruch 1, dadurch gekennzeichnet, daß der $SO_2$-(Partial)druck zu Beginn der Plasmabehandlung 10 bis 40 Pa beträgt.

4. Verfahren nach einem der Ansprüche 1 bis 3, dadurch gekennzeichnet, daß das $SO_2$ durch Mikrowellenenergie zur Plasmabildung angeregt wird.

5. Verfahren nach einem der Ansprüche 1 bis 4, dadurch gekennzeichnet, daß daß die Einwirkungsdauer des $SO_2$-Plasmas 1 Sekunde bis 10 Minuten beträgt.

6. Verfahren nach einem der Ansprüche 1 bis 4, dadurch gekennzeichnet, daß daß die Einwirkungsdauer des $SO_2$-Plasmas 10 Sekunde bis 4 Minuten beträgt.

7. Verfahren nach einem der Ansprüche 1 bis 6, dadurch gekennzeichnet daß der Kontaktwinkel von Wasser bei 25°C auf der hydrophilen Oberfläche vor der $SO_2$-Plasmabehandlung <30° beträgt.

8. Erzeugnis mit bakterienabweisender und zugleich blutverträglicher, Oberfläche gekennzeichnet durch Sulfonat-, Sulfat-, Carboxyl- und Hydroxylgruppen auf einer hydrophilen Oberfläche.

9. Verwendung des Erzeugnisses nach Anspruch 8 für hygienische, technische, nahrungsmittel- oder biotechnische Zwecke.

10. Verwendung des Gegenstands nach Anspruch 8 für medizinische Zwecke.